# NEW EUROPEAN PATENT SPECIFICATION

(11) **EP 1 636 527 B2**
(45) Date of publication and mention of the opposition decision: **17.01.2018**
(45) Mention of the grant of the patent: 28.10.2009
(21) Application number: 04739443.2
(22) Date of filing: 28.05.2004
(51) Int. Cl.: F24J 2/46

(54) **SOLAR COLLECTOR**
SONNENKOLLEKTOR
CAPTEUR SOLAIRE

(30) Priority: 13.06.2003 DK 200300888
(43) Date of publication of application: 22.03.2006
(60) Divisional application: 09013161.6
(73) Proprietor: VKR Holding A/S, 2970 Hørsholm (DK)
(72) Inventor: MOLLER, Brent, DK-2820 Gentofte (DK)
(74) Representative: Nordic Patent Service A/S
(86) International application number: PCT/EP2004/005814
(87) International publication number: WO 2004/111550

(56) References cited:
- EP-A- 0 877 214
- EP-A- 0 877 214
- EP-A- 0 979 981
- EP-A- 1 271 070
- EP-A- 1 271 070
- EP-A- 1 284 395
- WO-A-00/03185
- DE-A- 4 002 892
- DE-A- 10 157 528
- DE-A1- 2 650 143
- DE-U- 20 111 962
- GB-A- 2 142 951
- US-A- 3 866 285
- US-A- 4 098 265
- US-A- 5 596 981

## Description

The present invention relates to glazed solar collectors and methods for producing such collectors. Such solar collectors typically have a rectangular frame containing an absorber, an insulating layer beneath the absorber, and a cover pane spaced above the absorber. The collectors can be integrated or roof mounted on a pitched roof, or may be installed on a flat roof by means of a mounting frame.

### BACKGROUND ART

The Sunwise® series solar collector sold and manufactured by SunEarth Inc. is a glazed flat plate solar collector with a rigid foam insulating layer beneath and in surrounding relation to the copper plate absorber. The insulating layer is placed in a frame build from aluminum extrusions that form sidewalls and a textured aluminum backsheet. The sidewalls are assembled by riveting to create a rectangular frame. The backsheet fits into a slot in the frame and is pop-riveted to the sides and thus a stable container is provided. The insulating layer is placed in the frame and the absorber is mounted in a recess in the upper side of the insulation layer.

A cover pane is fitted onto a retainer ledge in the frame with a high-temperature continuous EPDM U-shaped neoprene gasket to thermally isolate the cover pane from the frame. A removable aluminum cap stripping is then secured to the frame with stainless steel screws. A continuous silicon seal between the cover pane and frame capstrip is applied to minimize moisture from entering the casing.

This prior art construction is relatively labor intensive to assemble. Extruded aluminum profiles are also relatively expensive material and require extensive tooling. Another issue with the above construction is stress created by the difference in coefficient of thermal linear expansion between aluminum and glass. Tempered glass has a coefficient of thermal expansion of about 9.0 x 10-6 1/K whereas aluminum has a coefficient of thermal expansion of 20.4-25.0 x 10-6/K. Solar connectors operate over a wide temperature range that may span from minus 20 °C (winter night) to well above 200 °C in stagnation. In a collector with a span of 2 meters the difference in linear expansion between the aluminum and the glass can be several millimeter. The silicon seal between the cover pane and frame capstrip can compensate for some of the expansion difference, but has not proven to be satisfactory under all circumstances, e.g. there have been reported leakage problems with the above type of solar collectors.

DE 2650143 discloses a solar collector with a box shaped lower housing portion that is provided with an isolation layer. The lower housing part is provided with a circumventing flange to which a transparent cover pane is glued with an adhesive.

### DISCLOSURE OF THE INVENTION

On this background, it is an object of the present invention to provide a solar collector in which displacement created by differences in coefficient of linear thermal expansion between the frame and the cover pane are better absorbed. This object is achieved in accordance with claim 1, by providing a solar collector comprising an absorber, an insulating layer beneath the absorber, a cover pane spaced above the absorber, and an outer frame having side panels surrounding the periphery of the insulating layer, the side panels having a ledge directed inwardly or outwardly from said side panel adjacent to its upper end, the outer frame being provided with one or more upwardly directed spacers for maintaining a distance between the ledges and the cover pane while fitting the cover pane, and a layer of flexible adhesive sealant bridging said distance and connecting the periphery of the cover pane to the ledges.

The layer of flexible adhesive is the only restriction on relative movement between the frame and the cover pane. Thus, in contrast to the above described prior art solution with cap strips, there is no direct mechanical contact or limitation between the parts. Thus, the relative displacement caused by the difference in coefficient of thermal linear expansion can be completely absorbed by shear in the layer of flexible adhesive sealant without any significant forces causing stress in the cover pane. The construction with the spacers allows a substantial and controllable thickness of the layer to ensure adequate flexibility over the complete operating temperature of the solar collector.

The spacer can be formed by an upstanding rim at the free end of the inwardly directed ledges. Thus, an integral and easy to produce spacer is created. If the ledges are directly outwardly the spacer can be formed by an upstanding rim that is substantially an upright projection of the side panel.

The upstanding rim can be provided with a gasket that covers the upper edge of the rim, preferably a gasket of a resilient material such as artificial rubber, e.g. polyisoprene or natural rubber or mixtures thereof, e.g. ethylene propylene mixtures.

The gasket can be provided on its outwardly facing side with a flexible dam to retain the flexible adhesive during application and to define a hollow space between the rim and the flexible dam itself. Thus, there is place for the layer of flexible adhesive sealant to shear towards the rim without being limited by the rim in its movement.

The gasket can be provided on its inwardly facing side with a flap extending over the insulation and under the absorber. Thus, the insulation layer and the reflective foil thereon are protected from the sides of the absorber plate.

The flexible adhesive sealant is preferably silicon based. The sealant may fully occupy the space between the ledges, the cover pane and the flexible dam to provide a substantially flush collector sidewall.

Preferably, the top surface of the cover pane forms the upper boundary of the solar collector. Thus, there are no ridges from e.g. capstrips that could retain water or snow and thus stress the sealants that keep moisture out of the enclosure.

The upper side of the insulation layer can be provided with a reflective foil.

It is another object of the present invention to provide a method for producing a solar collector that results in a solar collector in which displacement created by differences in coefficient of linear thermal expansion connection between the frame and the cover pane are better absorbed. This object is achieved in accordance with claim 10, by providing a method for producing a solar collector having an absorber, an insulating layer beneath the absorber, a cover pane spaced above the absorber, and an outer frame comprising the steps of providing an insulation layer and an outer frame having side panels, the side panels having a ledge directed inwardly or outwardly from said side panel adjacent to its upper end, providing one or more spacers for maintaining a distance between the ledges and the cover pane, providing a flexible dam on the inner part of the ledges for separating the space between the ledges and the cover pane from the interior space of the collector, placing a cover pane on the one or more spacers, applying a liquid flexible adhesive sealant to the space between the ledges, and allowing the liquid flexible adhesive seal to cure.

The method may further comprise the step of forming the one or more spacers integrally with the inwardly directed ledges, preferably by forming an upstanding rim at the free end of the ledges.

The flexible adhesive sealant used in the method is preferably silicone based.

Further objects, features, advantages and properties of the solar collectors and methods of producing a solar collector according to the invention will become apparent from the detailed description.

### BRIEF DESCRIPTION OF THE DRAWINGS

In the following detailed portion of the present description, the invention will be explained in more detail with reference to the exemplary embodiments shown in the drawings, in which
Fig. 1 is a cutaway perspective view of a solar collector according to the invention,
Figs. 2a to 2c are partial cross-sectional views of the solar collector of Fig. 1 at different temperatures,
Figs. 3a and 3b show a partial cutaway perspective views of a solar collector according provided with embedded attachment and support elements,
Fig. 4 shows a three side view of a sheet metal frame in a production stage,
Fig. 5 shows a perspective view on a mold for use with a method according to the invention,
Figs. 6 and 7 are cross-sectional views of two further preferred embodiments of solar collector according to the invention,
Fig. 8 is a cross-sectional view of another embodiment of the invention,
Fig. 9 is a cross-sectional view of yet another embodiment of the invention,
Figs. 10a, 10c and 10b are perspective cutaway views of variations of the embodiments shown in Figs. 8 and 9,
Figs. 11a, 11b, 11c and 11d show a detail of a bracket for use in the solar collector according to any of the embodiments.

### DETAILED DESCRIPTION

The preferred embodiment of the invention will be described specifically with reference to a flat plate collector assembly although it is understood that other absorber types may be employed with a minimum change in construction.

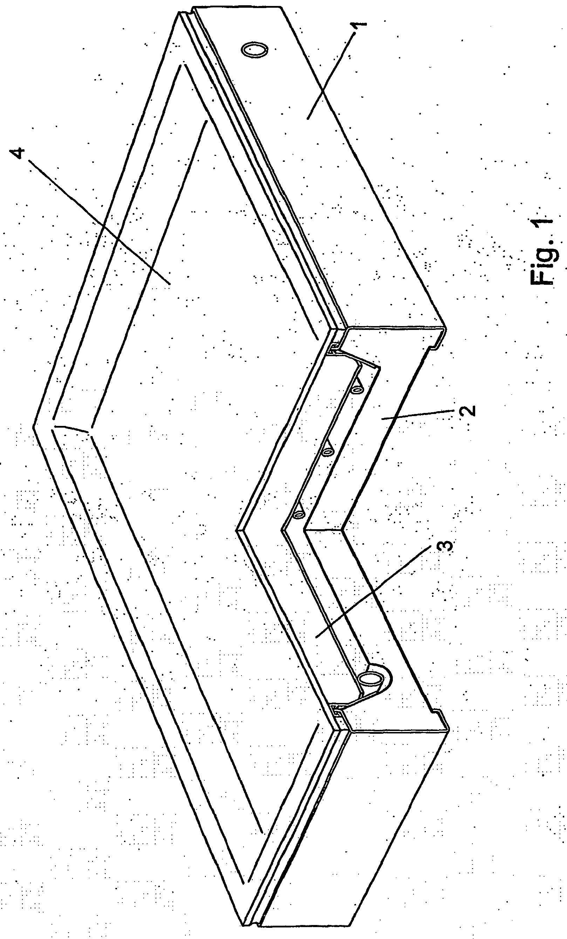

Fig. 1 shows by way of illustrative example a flat plate solar energy collector. Seen in cutaway perspective view of Fig. 1 the solar collector has a frame 1, insulation layer 2, absorber plate 3 and cover pane 4. The frame, the insulation layer and the cover pane form a case with an enclosure. The enclosure is used to provide support for the absorber, and to protect the collector from heat loss due to wind, plus the important function of keeping moisture from rain, snow and dew out of the collector.

The insulation layer 2 is made of a rigid foam urethane (PUR) or polyisocyanurate (PIR). These materials have an excellent insulation value per unit of thickness and are easy to handle because they are very light. They have also a higher compression resistance than e.g. mineral wool based insulation materials.

The upper surface of the insulation layer 2 is covered with a reflective silver foil and provided with a recess sized to be able to receive the absorber 3. The absorber 3 is received in the in the recess and except for its upper side surrounded by the insulation layer 2.

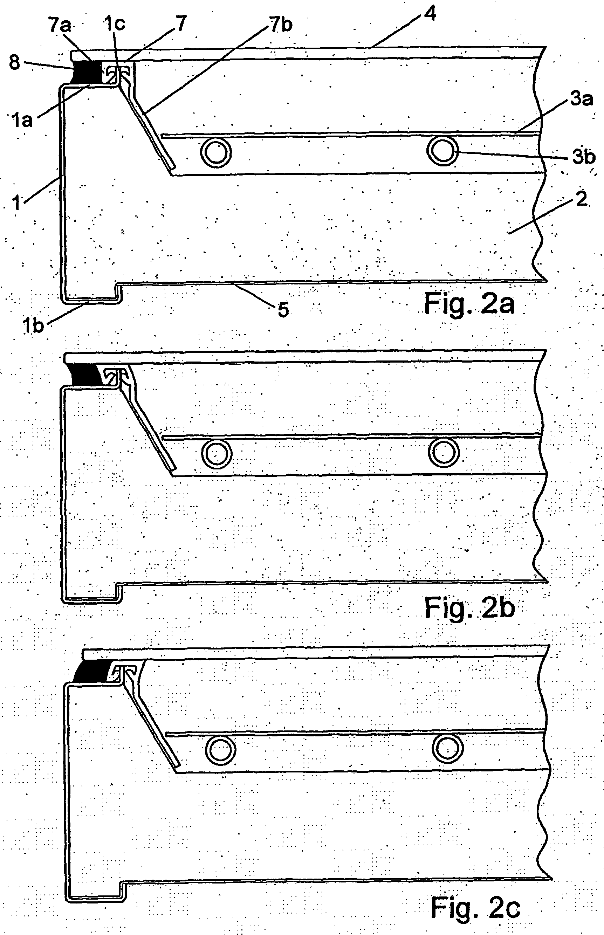

As shown in Fig. 2a the absorber comprises an absorber plate 3a and an absorber tubing 3b that channels the medium, typically water, used to transport the collected thermal energy. The absorber plate 3a and the copper tubing 3b may suitably consist of steel, copper or aluminum sheet or tubing, respectively. The absorber plate 3a and tubing 3b penetrating the case are thermally insulated from the case at all points of support, e.g. with high-temperature round EPDM neoprene gaskets.

The absorber plate 3a is provided with a semi-selective or a selective coating to improve the heat absorbing capacity of the absorber plate 3a.

The solar collector may also be provided with a backsheet 5 to protect the insulation layer 2 from weather influences and to further increase the rigidity of the construction. The backsheet is suitably formed by a plastic sheet or film material weaker than the frame material, e.g. polypropylene sheet or aluminum foil. A backsheet can be altogether avoided if the bottom side of the insulation layer is coated.

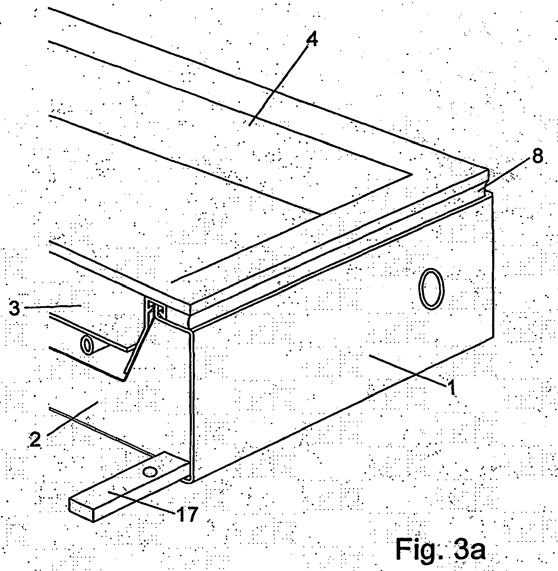

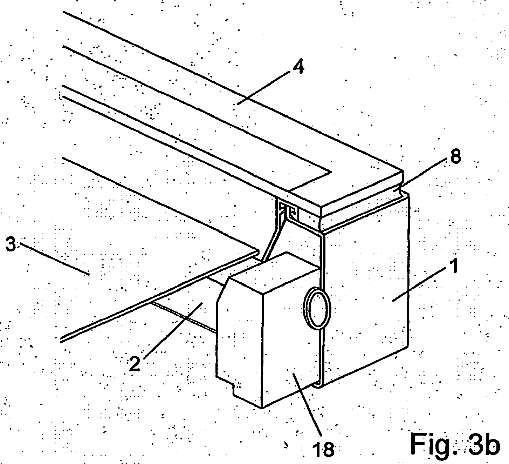

Figs. 3a and 3b show how a jacknut 17, tube support 18 or other fixtures can be provided on the inside of the outer frame for facilitating the affixation of the solar collector to a roof construction or for facilitating the connections of the tubing.

An important aspect of the invention resides in the construction and arrangement of the outer frame 1. The outer frame 1 comprises four side panels that are part of one rollformed sheet material profile. The sheet material is suitably made of sheet metal, preferably pre-painted aluminum.

The side panels 1 are substantially shaped as a U-profile with an upper inwardly directed latch 1a and a lower inwardly directed latch 1b The upper latch 1a is provided with an upstanding rim 1c.

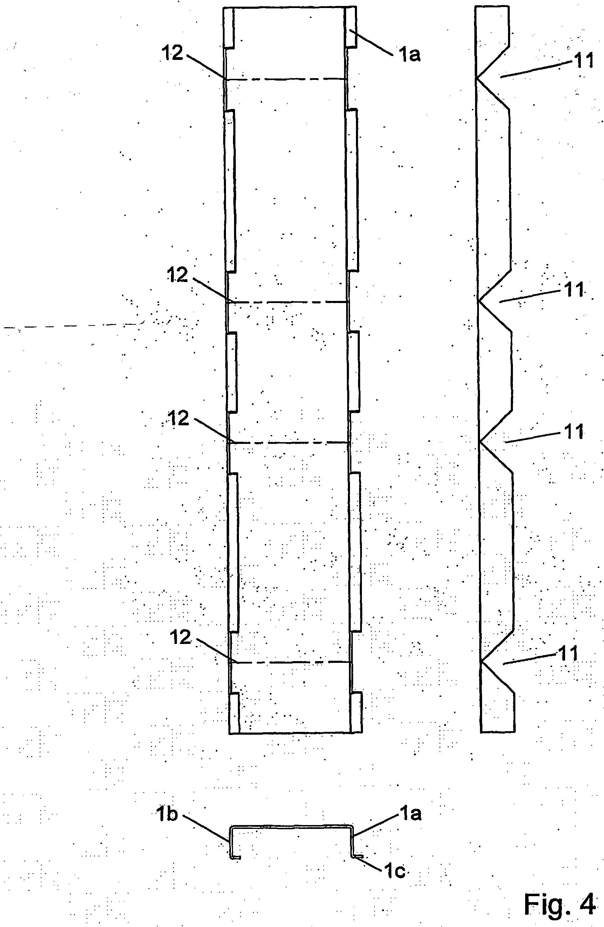

The sheet material profile in a state before assembly is shown in more detail in Fig. 4. The U-profile is notched at four sites 11 so that the U-profile can be bent along folding lines 12 and the free longitudinal ends of the U-profile are connected by welding to form a closed rectangular frame.

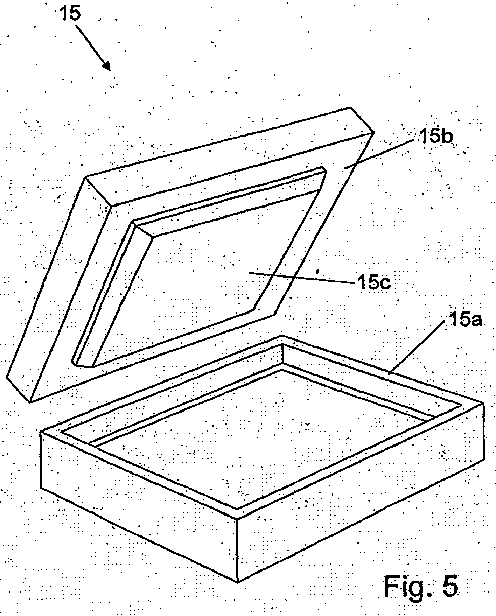

With reference to Fig. 5, the rectangular frame, together with a reflective foil and eventually with a loose backsheet 5, jacknuts 17 and tube support 18 are placed in a lower mold half 15a for producing the solar collector.

The lower mold half 15a is provided with a recess with contours that correspond to the outer contours of the frame and the bottom side of the insulation layer 2. The mold 15 is closed by an upper mold half 15b that is provided with a protrusion 15c with contours that correspond to the contours of the recess in the upper surface of the insulation layer 2. Then, liquid plastic foam such a PUR or PIR is injected into the mold 15. When the foam has hardened the mold 15 is opened and the assembly of the frame and the insulation layer 2 with the reflective foil and eventually a backsheet 5 is removed from the mold.

During the molding procedure the insulation layer has attached itself to the inner surfaces of the rectangular frame and to the inserts 17,18. The inside surfaces of the side panels 1 adhere thus to the insulation layer 2. The side panels 1 on their own are relatively thin and buckle sensitive. The rigid foam insulation layer is however a relatively stable body preventing the side panels from buckling under load. By adhering the side panels 1 to the periphery of the insulation 2, the warp resistance of the assembly is significantly improved because the insulation layer is an integral bearing part of the construction that contributes to the overall stability and stiffness of the solar collector.

The upstanding rim 1c acts as a spacer that supports the cover pane 4 and maintains a distance between the upper surface of latch 1a and the bottom surface of the cover pane 4 during fitting of the cover pane. A continuous EPDM neoprene gasket 7 is placed on the upstanding rims 1c. The gasket 7 is in sealing abutment with a peripheral zone of the bottom surface of the cover pane 4 to form a moisture barrier protecting the enclosure and to insulate the cover pane 4 thermally from the side panels 1.

The gasket is provided on its outwardly facing side with a flexible dam 7a. The flexible dam 7a is arranged to define a hollow space between the rim and the dam itself. The hollow space allows the flexible dam to move unhindered. The gasket is provided on its inwardly facing side with a flap 7b extending over the insulation layer and under the absorber 3. The flap protects the silver foil and the insulation layer from the sides of the absorber plate 3a.

When the gasket has been placed on the rim 1c, the cover pane 4 is placed on top of the gasket 7 and the space between the upper side of the latch 1a and the bottom surface of the cover pane 4 is filled with a flexible adhesive sealant such as a silicone based sealant in liquid form. The flexible dam 7a serves as a barrier preventing the liquid flexible adhesive sealant from entering the cavity when it is applied.

When the sealant has cured it forms a flexible layer that securely attaches the cover pane 4 to the side panels. The layer of flexible adhesive sealant also forms a second moisture barrier protecting the enclosure. The enclosure is thus protected from moisture by a two-stage barrier, thus, reducing the likeliness of leakage significantly.

The layer of flexible adhesive sealant attaches the cover pane 4 to the side panels so that the cover pane 4 becomes an integral bearing part of the construction that contributes to the overall stability and stiffness of the solar collector. There is therefore no need for capstrips and thus there is no risk of water or snow to remain caught at the transition between the cover pane and the capstrip.

Fig. 2a illustrates the cross-section of the solar collector at room temperature. Since this is the temperature at which the cover pane was fitted to the frame there are no discrepancies in length between the aluminum frame and the tempered glass cover pane.

Fig. 2b illustrates the cross-section of the solar collector at a high temperature such as may e.g. occur during stagnation, i.e. when the heat transporting medium is not flowing so that the heat is not transported away. The cover pane has expanded more than the frame with the temperature raise. The difference in length is compensated for by an outwardly directed shear deformation of the layer of flexible adhesive sealant 8.

Fig. 2c illustrates the cross-section of the solar collector at a low temperature such as may e.g. occur in a cold winter night. The cover pane has contracted more than the frame with the temperature fall. The difference in length is compensated for by an inwardly directed shear deformation of the layer of flexible adhesive sealant 8.

Flexible adhesive sealants such as silicon based sealant can well endure such deformation and still maintain good adhesion to the cover pane and the frame both at low and high temperatures. Because of the low elasticity modus of the flexible adhesive sealant the shear forces acting on the cover pane and the frame are negligible.

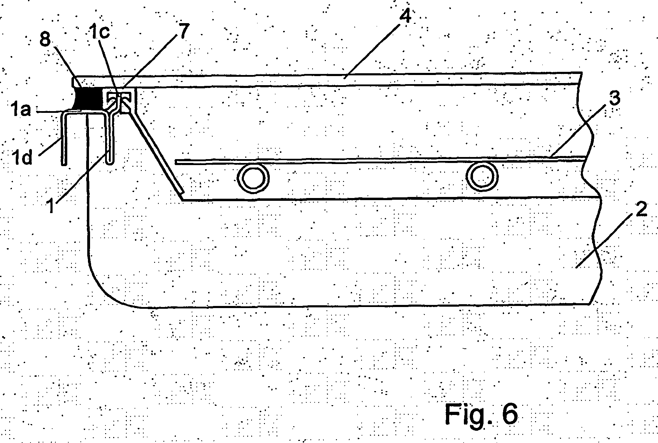

The solar collector illustrated in Fig. 6 according to a further preferred embodiment of the invention is particularly suitable for integrated roof mounting. The solar collector comprises an insulation layer 2 of rigid polymeric foam. The upper surface of the insulation layer 2 is provided with a recess and is covered with a heat reflective metal foil to reduce the heat load on the insulation material. An absorber 3 with corresponding tubing is placed in the recess in the insulation layer 2.

The outer frame is made from rollformed aluminum sheet and is adjusted to integrated roof mounting on a flashing of the roof construction by directing the ledge 1a outward and ending it in a downward rim 1d. The ledge 1a and the downward rim 1d fit over the flashing (not shown) on the roof construction to obtain a watertight construction. The outer frame comprises an upstanding rim 1c to space the cover pane from the ledge 1c during fitting of the cover pane.

The sides of the outer frame panels 1 are embedded in the rigid foam insulation layer 2 in order to support the side panel 1 against buckling and to render the insulation layer 2 an integral bearing part of the solar collector construction. The outer frame is provided with a spacer 1c provided with a gasket 7 identical with the spacer 1c described above with reference to Figs. 1 to 4. The cover pane 4 is attached to the outer frame 1 by applying a liquid flexible adhesive sealant as described above. Because the solar collector according to this preferred embodiment is intended for integral roof mounting, no outer protection for the insulation layer 2 in the form of a backsheet or outer side walls is provided. The overall construction is therefore light and material saving.

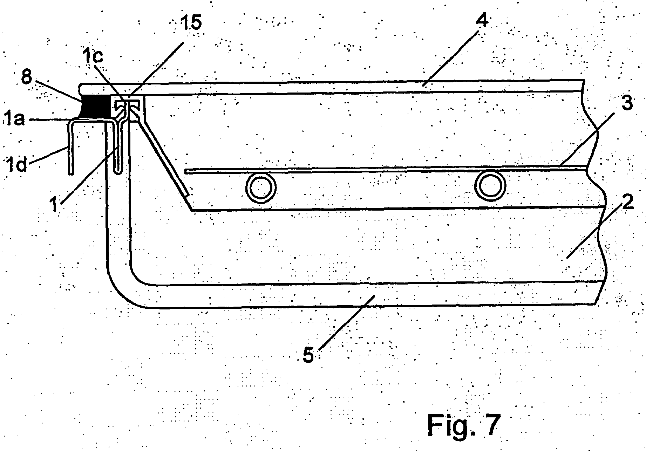

Fig. 7 shows an embodiment that is similar to the embodiment of Fig. 6, apart from the provision of a protective casing 5 below and in surrounding relation to the insulation layer 2. In certain circumstances it is namely of advantage to provide the insulation layer 2 with a protection from environmentally produced damaging effects and from jolts and impacts during transport and mounting. The casing 5 is made from an impact resistant moldable material, e.g. a material having a substantial wood fiber content. The casing has a bottom panel and upstanding side walls that surround the insulation layer 2. The side walls 1 of the outer frame are embedded in the upright walls of the casing 5. The outer frame and the casing 5 thus become one integral bearing structure that is light and easy to manufacture.

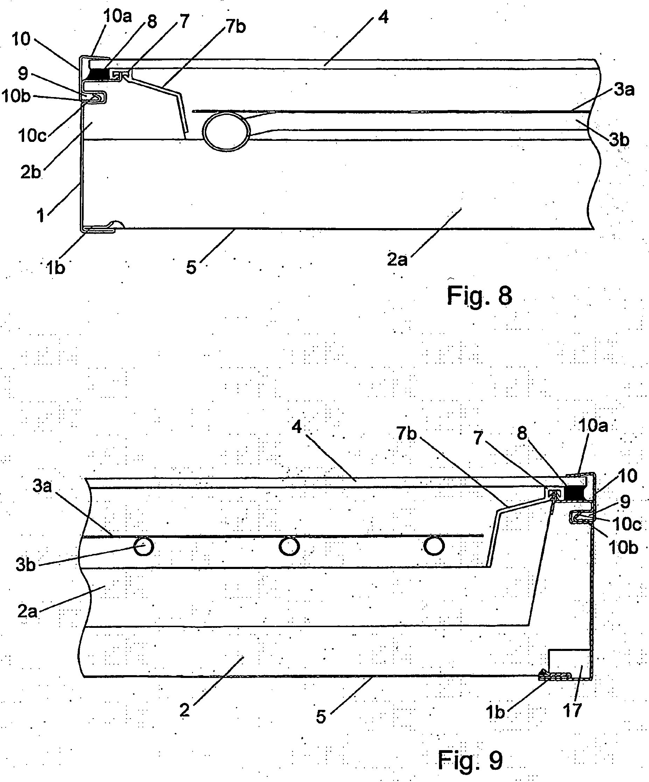

Fig. 8 illustrates a further preferred embodiment of the invention in cross-section. The collector comprises like the previously described embodiments an absorber with an absorber plate 3a and an absorber tubing 3b that channels the medium, typically water, used to transport the collected thermal energy.

The rigid foam insulation layer 2 is replaced with a heat resistant insulation layer 2a,2b and the upper surface is covered with a reflective silver foil. The heat resistant insulation layer is made from e.g. mineral wool or glass wool. The heat resistant insulation layer does not adhere to the inner walls of the casing 5. The heat resistant insulation layer comprises a bottom mat 2a below the absorber 3 and a circumferential dam 2b surrounding the absorber and supporting the flap 7b.

Fig. 9 illustrates another preferred embodiment of the invention in cross-section. The collector comprises like the previously described embodiments an absorber with an absorber plate 3a and an absorber tubing 3b that channels the medium, typically water, used to transport the collected thermal energy.

The rigid foam layer 2, is supplemented with a heat resistant insulation layer 2a there above. The upper surface of the heat resistant insulation layer 2a is covered with a silver foil. The heat resistant insulation layer 2a is made from e.g. mineral wool a glass wool and protects the rigid foam layer 2 from the heat of the absorber to prevent deterioration of the rigid foam layer 2. The commercially available rigid foams, such as PUR, deteriorate relatively quick is exposed to temperatures above 150°, a temperature that part of the insulation layer close to the absorber may well reach.

The embodiments of Figs. 8 and 9 have coincidentally been illustrated in combination with protective stripping 10, but they could just as well be realized without the protective stripping 10.

In both Fig. 8 and Fig. 9 the cover pane 4 is connected to the outer frame 1 by a silicon layer 8. The outer frame 1 is almost identical to the outer frame described in detail with reference to Figs. 1 to 7. Apart from the earlier described features, the preferably rollformed frame 1 is further provided with a circumferential groove 9. The groove 9 is formed by folds in the side panel and serves to increase the rigidity of the overall structure and to receive a ledge 10b of a protective stripping 10.

The protective stripping 10 has a substantially U-shaped profile, with a top ledge 10a covering the upper edge of the glass pane 4 and a lower ledge 10b inserted in the groove 9. The lower ledge 10b is folded over to form an arresting lip 10c. The tip of the arresting lip 10c engages the inner upper surface of the groove 9 and thereby secures the protective stripping 10 to the frame 1. The top ledge 10a is slightly sloping downwards towards the cover pane 4 so that only its tip abuts with the cover pane 4, thus avoiding that water can get trapped between the ledge 10a and the cover pane 4.

The protective stripping has several functions.

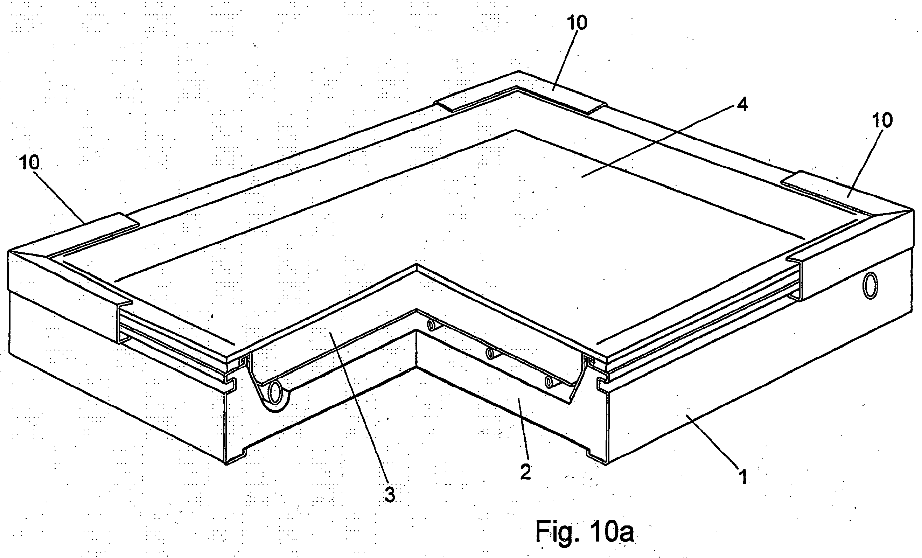

When the protective stripping 10 is only placed on the corners of the frame 1, as shown in Fig. 10a, the protective stripping 10 forms a redundant means of securing the cover pane 4 to the frame 1 that will prevent the cover pane 4 from falling should the silicon connection 8 between the frame 1 and the cover pane 4 against expectations ever fail.

The cover pane 4 is in all the described embodiments preferably made from tempered glass, i.e. a strong and durable glass quality. However, the edges of the pane are particularly sensitive to mechanical impact and could be damaged by objects hitting the edge (e.g. hailstones), leading to a chipped or cracked cover pane.

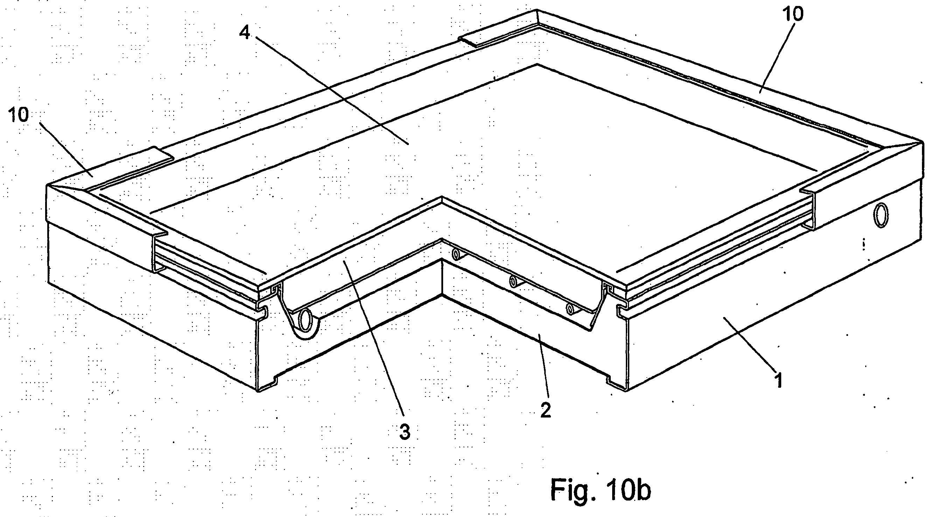

When the protective stripping 10 is placed over at least one side of the edge of the cover pane 4 and on the remaining corners of the frame 1 as shown in Fig. 10b, the protective stripping 10 also forms a protection of the cover pane 4 from mechanical impact. The side of the collector with the "protected" edge is preferably the "upper" edge when the collector is mounted on a sloping roof.

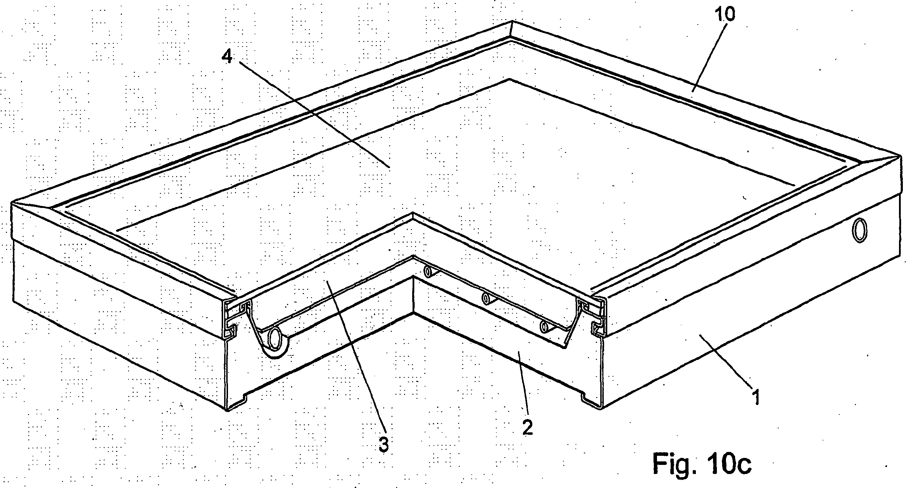

When the protective stripping 10 is placed all around the cover pane 4 as shown in Fig. 10c, the protective stripping 10 forms an even better protection from mechanical impact and serves to protect the silicon layer 8 from weather influences such as moist and direct sunlight. A ventilation space is provided between the protective stripping 10 and the silicon layer 8.

The protective stripping 10 can be applied not only to the embodiments in which it is shown, but also to the embodiments shown in Figs. 1 to 7.

The solar collector according to the embodiments of Figs. 8,9,10a,10b,10c may also be provided with a backsheet 5. The backsheet 5 is received in a fold in the internally directed ledge 1b and fixed thereto by rivets (not shown). The backsheet 5 is suitably formed by a plastic sheet or film material weaker than the frame material, e.g. polypropylene sheet or aluminum foil.

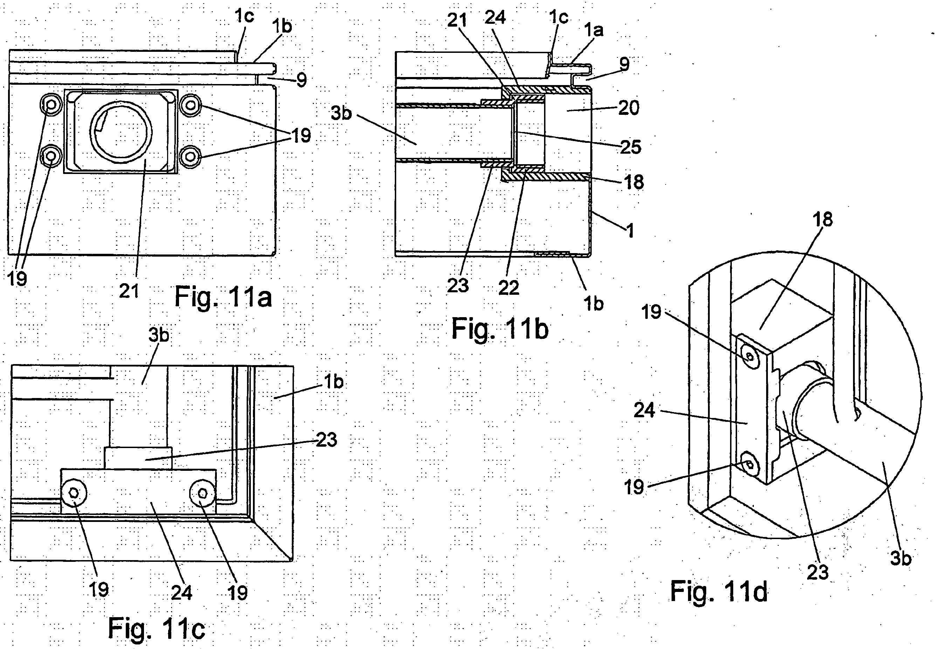

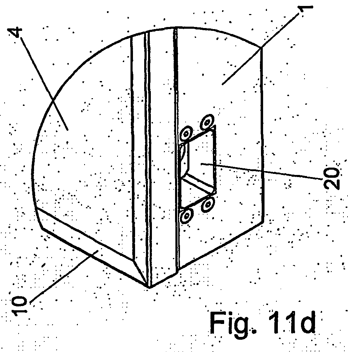

Figs. 11a, 11b, 11c and 11d illustrate a bracket 18 holding a pipe coupling 21 that serves to connect the tubing 3b to the outer tubing (not shown). The bracket 18 comprises a preferably plastic body that is secured to the inner side of the frame 1 by screws 19. The bracket 18 is provided with a substantially rectangular recess 20 in which the pipe coupling 21 is received. The recess 20 is upwardly open on the side of the bracket that faces the absorber. The pipe coupling 21 is inserted in the upwardly open part of the recess and secured in the recess by a locking plate 24. The pipe coupling 21 has a box-shaped section 22 that matches the rectangular recess 20 and a cylindrical section 23 that protrudes from the bracket 18 towards the absorber. The pipe coupling 21 is provided with a through-going bore 25. The part of the bore extending through the box-shaped section 22 is provided with and internal thread. The part of the bore extending through the cylindrical section 23 is dimensioned to receive an end of the tubing 3b therein. The tubing 3b is connected to the cylindrical section 23 by welding, soldering or other suitable technique. The internal thread in the bore in the box-shaped section 22 serves to receive the outer tubing (not shown), the extremity of which is provided with a matching thread. A substantial torque needs to be applied to secure the outer tubing tightly to the pipe coupling 18, due to sealing material being wound around the threaded extremity of the outer tubing. The sealing material, is compressed between the threads when the outer tubing is screwed into the pipe coupling, causing a relatively high torque to be applied in the process. The pipe coupling 18 is capable of resisting this torque since the box-shaped 22 section is tightly received in the rectangular recess 20 in the bracket 18 and prevents the pipe coupling 21 from rotating.

The bracket assembly can be used not only to the embodiment in which it is shown, but also to the embodiments shown in Figs. 1 to 10c.

Although the present invention has been described in detail for purpose of illustration, it is understood that such detail is solely for that purpose, and variations can be made therein by those skilled in the art without departing from the scope of the invention, as defined by the claims.

## Claims

1. A solar collector comprising:
an absorber (3), an insulating layer (2) beneath the absorber,
a cover pane (4) spaced above the absorber, and
an outer frame (1) having side panels surrounding the periphery of the insulating layer (2),
the side panels (1) having a ledge (1a) directed inwardly or outwardly from said side panel adjacent to its upper end,
the outer frame (1) being provided with one or more upwardly directed spacers (1c) for maintaining a distance between the ledges (1a) and the cover pane (4) while fitting the cover pane,
**characterized in that** it further comprises a layer of flexible adhesive sealant (8) bridging said distance and connecting the periphery of the cover pane (4) to the ledges (1a) so that the layer of flexible adhesive sealant (8) is the only restriction on relative movement between the frame (1) and the cover pane (4) .

2. A solar collector according to claim 1, wherein the ledges (1a) are directed inwardly and terminate in an upstanding rim (1c) that forms the spacer.

3. A solar collector according to claim 1, wherein the ledges (1a) are directed outwardly and the spacer is formed by an upstanding rim (1c) that is substantially an upright projection of the side panel (1).

4. A solar collector according to any of claims 1 to 34, wherein the upstanding rim (1c) is provided with a gasket (7) that covers the upper edge of the rim, preferably a gasket of a resilient material such as artificial rubber such as polyisoprene or natural rubber or mixtures thereof, such as ethylene propylene mixtures.

5. A solar collector according to claim 4, wherein the gasket (7) is provided on its outwardly facing side with a flexible dam (7a) to retain the flexible adhesive sealant (8) during application and to define a hollow space between the rim (1c) and the flexible dam (7a) itself.

6. A solar collector according to any of claims 1 to 5, wherein the flexible adhesive sealant (8) is silicon based.

7. A solar collector according claim 5 or 6, wherein the flexible adhesive sealant (8) fully occupies the space between the ledges (1a), the cover pane (4) and the flexible dam (7a).

8. A solar collector according to any of claims 1 to 7, wherein the layer of flexible adhesive sealant (8) has a substantial height to be able to deform and compensate for substantial displacement between the frame and the cover pane (4) due to difference in coefficient of linear expansion between the frame material and the cover pane material.

9. A method for producing a solar collector having:
an absorber (3), an insulating layer (2) beneath the absorber, a cover pane (4) spaced above the absorber, and an outer frame comprising the steps of:
providing an insulation layer (2) and an outer frame having side panels (1), the side panels having a ledge (1a) directed inwardly or outwardly from said side panel adjacent to its upper end,
providing one or more spacers (1c) for maintaining a distance between the ledges (1a) and the cover pane (4),
**characterized in that** the method further comprises
providing a flexible dam (7a) on the inner part of the ledges (1a) for separating the space between the ledges (1a) and the cover pane (4) from the interior space of the collector, placing a cover pane (4) on the one or more spacers (1c),
applying a liquid flexible adhesive sealant (8) to the space between the ledges (4) and the cover pane (4), and allowing the liquid flexible adhesive sealant (8) to cure.

10. A method according to claim 9, further comprising the step of forming the one or more spacers (1c) integrally with the inwardly directed ledges (1a), preferably by the ledge terminating in an upstanding rim that forms the spacer.

## Patentansprüche

1. Solarkollektor, umfassend:
einen Absorber (3), eine Isolationsschicht (2) unterhalb des Absorbers,
eine Abdeckscheibe (4), die oberhalb des Absorbers beabstandet ist, und
einen Außenrahmen (1) mit Seitentafeln, die den Umfang der Isolationsschicht (2) umgeben,
wobei die Seitentafeln (1) einen Absatz (1a) aufweisen, der von der Seitentafel in der Nähe ihres oberen Endes nach innen oder nach außen gerichtet ist,
wobei der Außenrahmen (1) mit einem oder mehreren aufwärts gerichteten Abstandhaltern (1c) zur Beibehaltung einer Distanz zwischen den Absätzen (1a) und der Abdeckscheibe (4) versehen ist, während die Abdeckscheibe eingepasst wird,
**dadurch gekennzeichnet, dass** er ferner umfasst:
eine Schicht aus flexiblem Haft-Dichtmittel (8), dass die Distanz überbrückt und den Umfang der Abdeckscheibe (4) mit den Absätzen (1a) verbindet, so dass die Schicht aus flexiblem Haft-Dichtmittel (8) die einzige Beschränkung hinsichtlich eine relative Bewegung zwischen dem Rahmen (1) und der Abdeckscheibe (4) ist.

2. Solarkollektor nach Anspruch 1,
wobei die Absätze (1a) nach innen gerichtet sind und in einer nach oben stehenden Einfassung (1c) enden, die den Abstandhalter bildet.

3. Solarkollektor nach Anspruch 1,
wobei die Absätze (1a) nach außen gerichtet sind und der Abstandhalter durch eine nach oben stehende Einfassung (1c) gebildet ist, die im Wesentlichen ein aufrechter Vorsprung der Seitentafel (1) ist.

4. Solarkollektor nach einem der Ansprüche 1 bis 3,
wobei die nach oben stehende Einfassung (1c) mit einem Dichtungselement (7) versehen ist, das den oberen Rand der Einfassung bedeckt, bevorzugt ein Dichtungselement aus einem nachgiebigen Material, wie Synthesegummi, wie Polyisopren, oder Naturkautschuk oder Mischungen daraus, wie Ethylenpropylenmischungen.

5. Solarkollektor nach Anspruch 4,
wobei das Dichtungselement (7) an seiner nach außen weisenden Seite mit einer flexiblen Sperre (7a) versehen ist, um das flexible Haft-Dichtmittel (8) während der Aufbringung zu halten und einen Hohlraum zwischen der Einfassung (1c) und der flexiblen Sperre (7a) selbst zu definieren.

6. Solarkollektor nach einem der Ansprüche 1 bis 5,
wobei das flexible Haft-Dichtmittel (8) auf Silikonbasis vorliegt.

7. Solarkollektor nach einem der Ansprüche 5 oder 6,
wobei das flexible Haft-Dichtmittel (8) den Raum zwischen den Absätzen (1a), der Abdeckscheibe (4) und der flexiblen Sperre (7a) vollständig besetzt.

8. Solarkollektor nach einem der Ansprüche 1 bis 7,
wobei die Schicht aus flexiblem Haft-Dichtmittel (8) eine wesentliche Höhe besitzt, um in der Lage zu sein, sich zu verformen und eine wesentliche Versetzung zwischen dem Rahmen und der Abdeckscheibe (4) aufgrund einer Differenz des linearen Ausdehnungskoeffizienten zwischen dem Rahmenmaterial und dem Abdeckscheibenmaterial zu kompensieren.

9. Verfahren zum Herstellen eines Solarkollektors, der einen Absorber (3), eine Isolationsschicht (2) unterhalb des Absorbers, eine Abdeckscheibe (4), die über dem Absorber beabstandet ist, und einen Außenrahmen aufweist, umfassend die Schritte, dass:
eine Isolationsschicht (2) und ein Außenrahmen mit Seitentafeln (1) bereitgestellt werden, wobei die Seitentafeln einen Absatz (1a) aufweisen, der von der Seitentafel in der Nähe ihres oberen Endes nach innen oder nach außen gerichtet ist,
ein oder mehrere Abstandhalter (1c) zur Beibehaltung einer Distanz zwischen den Absätzen (1a) und der Abdeckscheibe (4) bereitgestellt werden,
**dadurch gekennzeichnet, dass** das Verfahren ferner umfasst,
dass:
eine flexible Sperre (7a) an dem Innenteil der Absätze (1a) zum Trennen des Raumes zwischen den Absätzen (1a) und der Abdeckscheibe (4) von dem Innenraum des Kollektors bereitgestellt wird,
eine Abdeckscheibe (4) an dem einen oder den mehreren Abstandhaltern (1c) angeordnet wird,
ein flüssiges flexibles Haft-Dichtmittel (8) auf den Raum zwischen den Absätzen (4) und der Abdeckscheibe (4) aufgebracht wird, und das flüssige flexible Haft-Dichtmittel (8) einer Härtung unterzogen wird.

10. Verfahren nach Anspruch 9,
ferner mit dem Schritt, dass der eine oder die mehreren Abstandhalter (1c) einteilig mit den nach innen gerichteten Absätzen (1a) bevorzugt durch den Absatz geformt werden, der in einer nach oben stehenden Einfassung endet, die den Abstandhalter bildet.

## Revendications

1. Collecteur solaire comprenant :
un absorbant (3), une couche isolante (2) en dessous de l'absorbant,
un panneau de protection (4) situé à distance au-dessus de l'absorbant, et
un cadre extérieur (1) présentant des panneaux latéraux entourant la périphérie de la couche isolante (2),
les panneaux latéraux (1) présentant une pièce d'appui (1a) dirigée vers l'intérieur ou vers l'extérieur à partir du panneau latéral adjacent à son extrémité supérieure,
le cadre extérieur (1) présentant une ou plusieurs entretoises (1c) dirigées vers le haut afin de maintenir une distance entre les pièces d'appui (1a) et le panneau de protection (4) tout en s'adaptant au panneau de protection,
**caractérisé en ce qu'**il comprend en outre :
une couche de produit d'étanchéité adhésif et flexible (8) permettant de réduire cette distance et de connecter la périphérie du panneau de protection (4) avec les pièces d'appui (1c) de telle sorte que la couche de produit d'étanchéité adhésif et flexible (8) constitue la seule restriction sur le mouvement relatif entre le cadre (1) et le panneau de protection (4).

2. Collecteur solaire selon la revendication 1, dans lequel les pièces d'appui (1a) sont dirigées vers l'intérieur et se terminent en une couronne positionnée à la verticale (1c) qui forme l'entretoise.

3. Collecteur solaire selon la revendication 1, dans lequel les pièces d'appui (1a) sont dirigées vers l'extérieur et l'entretoise est formée par une couronne positionnée à la verticale (1c) qui est sensiblement une projection vers le haut du panneau latéral (1).

4. Collecteur solaire selon l'une quelconque des revendications 1 à 3, dans lequel la couronne positionnée à la verticale (1c) présente un joint (7) qui recouvre le bord supérieur de la couronne, de préférence un joint en un matériau résilient tel que du caoutchouc artificiel, par exemple du polyisoprène, ou du caoutchouc naturel, ou des mélanges des deux, par exemple des mélanges d'éthylène-propylène.

5. Collecteur solaire selon la revendication 4, dans lequel le joint (7) présente sur sa face extérieure un barrage flexible (7a) pour retenir le produit d'étanchéité adhésif et flexible (8) lors de l'application et pour définir un espace creux entre la couronne (1c) et le barrage flexible (7a).

6. Collecteur solaire selon l'une quelconque des revendications 1 à 5, dans lequel le produit d'étanchéité adhésif et flexible (8) est à base de silicium.

7. Collecteur solaire selon la revendication 5 ou 6, dans lequel le produit d'étanchéité adhésif et flexible (8) occupe complètement l'espace entre les pièces d'appui (1a), le panneau de protection (4) et le barrage flexible (7a).

8. Collecteur solaire selon l'une quelconque des revendications 1 à 7, dans lequel la couche de produit d'étanchéité adhésif et flexible (8) présente une hauteur sensible afin de pouvoir se déformer et de pouvoir compenser un mouvement sensible entre le cadre et le panneau de protection (4) en raison d'une différence de coefficient de dilatation linéaire entre le matériau du cadre et le matériau du panneau de protection.

9. Procédé de fabrication d'un collecteur solaire présentant un absorbant (3), une couche isolante (2) en-dessous de l'absorbant, un panneau de protection (4) situé à distance au-dessus de l'absorbant, et un cadre extérieur, comprenant des étapes consistant à :
prévoir une couche isolante (2) et un cadre extérieur présentant des panneaux latéraux (1), les panneaux latéraux présentant une pièce d'appui (1a) dirigée vers l'intérieur ou vers l'extérieur à partir du panneau latéral adjacent à son extrémité supérieure,
prévoir une ou plusieurs entretoises (1c) afin de maintenir une distance entre les pièces d'appui (1a) et le panneau de protection (4),
**caractérisé en ce que** le procédé comprend en outre des étapes consistant à :
prévoir un barrage flexible (7a) sur la partie interne des pièces d'appui (1a) afin de séparer l'espace entre les pièces d'appui (1a) et le panneau de protection (4) de l'espace intérieur du collecteur,
placer un panneau de protection (4) sur le ou les entretoises (1c),
appliquer un produit d'étanchéité liquide, adhésif et flexible (8) dans l'espace entre les pièces d'appui (4) et le panneau de protection (4), et
permettre au produit d'étanchéité liquide, adhésif et flexible (8) de sécher.

10. Procédé selon la revendication 9, comprenant en outre l'étape consistant à former la ou les entretoises (1c) en intégralité avec les pièces d'appui dirigées vers l'intérieur (1a), de préférence par la pièce d'appui se terminant en une couronne positionnée à la verticale qui forme l'entretoise.
